# EUROPÄISCHE PATENTSCHRIFT

(11) **EP 3 297 879 B1**
(45) Veröffentlichungstag und Bekanntmachung des Hinweises auf die Patenterteilung: **18.12.2019**
(21) Anmeldenummer: 16717878.9
(22) Anmeldetag: 13.04.2016
(51) Int. Cl.: B60T 8/40, B60T 13/74, B60T 13/68

(54) **ELEKTROHYDRAULISCHE KRAFTFAHRZEUG-BREMSANLAGE**
ELECTROHYDRAULIC MOTOR VEHICLE BRAKING SYSTEM
SYSTÈME DE FREINAGE ÉLECTROHYDRAULIQUE POUR VÉHICULE À MOTEUR

(30) Priorität: 21.05.2015 DE 102015006853
(43) Veröffentlichungstag der Anmeldung: 28.03.2018
(73) Patentinhaber: ZF Active Safety GmbH, 56070 Koblenz (DE)
(72) Erfinder: KNECHTGES, Carsten, 56727 Mayen (DE); KNECHTGES, Josef, 56727 Mayen (DE)
(74) Vertreter: Schmidt, Steffen J.
(86) Internationale Anmeldenummer: PCT/EP2016/058055
(87) Internationale Veröffentlichungsnummer: WO 2016/184616

(56) Entgegenhaltungen:
- DE-A1- 10 330 146
- DE-A1-102010 050 133
- DE-A1-102011 077 169
- DE-A1-102012 202 645

## Beschreibung

### Hintergrund

Die vorliegende Offenbarung betrifft allgemein das Gebiet der Bremsanlagen. Konkret wird eine elektrohydraulische Kraftfahrzeug-Bremsanlage beschrieben. Moderne Kraftfahrzeug-Bremsanlagen arbeiten nach dem "Brake-by-Wire"-Prinzip. Das bedeutet, dass ein Hydraulikdruck an den Radbremsen fußkraftunabhängig über einen Hydraulikdruckerzeuger aufgebaut wird. Brake-by-Wire-Bremsanlagen bieten mehrere Vorteile. Beispielsweise sind sie in hervorragender Weise zum Einbau von Energierückgewinnungssystemen geeignet. Ferner kann durch derartige Bremsanlagen ein radindividueller Bremsdruckaufbau besser gesteuert und Fahrdynamikregelungsprogramme (z. B. ABS-, ASR-, ESP-Programme) besser integriert werden.

### Stand der Technik

Beispiele für die Realisierung von Brake-by-Wire-Bremsanlagen sind aus der WO 2012/062393 A1 und der WO 2012/152352 A1 bekannt. Die dort gelehrten elektrohydraulische Bremsanlagen weisen verschiedene Bremskreise auf, die über Hydraulikfluid bzw. einen Hydraulikfluiddruck ansteuerbar sind. Ferner umfassen bekannte Hydraulikdruckerzeuger eine Zylinder-Kolben-Einrichtung zur Hydraulikdruckerzeugung und einen auf den Kolben der Zylinder-Kolben-Einrichtung einwirkenden elektromechanischen Aktor. Der elektromechanische Aktor ist der Zylinder-Kolben-Einrichtung nachgeordnet und mit dem Kolben der Zylinder-Kolben-Einrichtung direkt gekoppelt. Der Kolben kann so über den Aktor unmittelbar betätigt werden, wodurch ein Hydraulikdruck an den Radbremsen fußkraftunabhängig aufgebaut werden kann. Ferner ist die Zylinder-Kolben-Einrichtung über eine Kraftübertragungseinrichtung mit einer Pedalschnittstelle koppelbar. In einem Notbetrieb der Bremsanlage (z.B. bei Ausfall des elektromechanischen Aktors oder dessen Ansteuerung) ermöglicht die Kraftübertragungseinrichtung eine mechanische Kopplung der Zylinder-Kolben-Einrichtung mit der Bremspedalschnittstelle, um eine Betätigung des Kolbens der Zylinder-Kolben-Einrichtung mittels der an der Pedalschnittstelle anliegenden Fußkraft zu ermöglichen (Push-Through-Betrieb).

Weitere Beispiele für elektrohydraulische Bremsanlagen lassen sich der DE 103 30 146 A1 A1, der DE 10 2011 086 258 A1 und der DE 10 2012 212 836 A1 entnehmen.

### Zugrundeliegendes Problem

Die Bremskreise einer elektrohydraulischen Bremsanlage sollen auf kostengünstige und bauraumoptimierte Weise fluidtechnisch vollständig voneinander getrennt werden. Dabei soll sichergestellt werden, dass an den fluidisch vollständig voneinander getrennten Bremskreis der gleiche Hydraulikdruck anliegt bzw. aufrechterhalten werden kann.

### Vorgeschlagene Lösung

Die elektrohydraulische Kraftfahrzeug-Bremsanlage umfasst einen ersten Bremskreis mit wenigstens einer Radbremse und einen zweiten Bremskreis mit wenigstens einer Radbremse. Eine erste Zylinder-Kolben-Einrichtung zur Hydraulikdruckerzeugung in wenigstens einem von ersten oder zweiten Bremskreis ist mit wenigstens einem von ersten und zweiten Bremskreis fluidisch zu koppeln.

Die erste Zylinder-Kolben-Einrichtung umfasst wenigstens einen ersten Kolben. Eine zweite Zylinder-Kolben-Einrichtung umfasst wenigstens einen zweiten Kolben. Auf den zweiten Kolben der zweiten Zylinder-Kolben-Einrichtung wirkt ein elektromechanischer Aktor ein. Die zweite Zylinder-Kolben-Einrichtung ist mit der ersten Zylinder-Kolben-Einrichtung fluidisch zu koppeln, um einen bei Betätigung des elektromechanischen Aktors in der zweiten Zylinder-Kolben-Einrichtung erzeugten Hydraulikdruck für eine Betätigung der ersten Zylinder-Kolben-Einrichtung bereitzustellen. Zudem ist die zweite Zylinder-Kolben-Einrichtung derart mit dem ersten Bremskreis und/oder dem zweiten Bremskreis fluidisch zu koppeln, dass bei Betätigung des elektromechanischen Aktors der erste und/oder der zweite Bremskreis direkt mit einem in der zweiten Zylinder-Kolben-Einrichtung erzeugten Hydraulikdruck beaufschlagbar sind.

Die zweite Zylinder-Kolben-Einrichtung kann der Bremsanlage einen Hydraulikdruck zur hydraulischen Betätigung des ersten Kolbens der ersten Zylinder-Kolben-Einrichtung bereitstellen. Das Maß des bereitgestellten Betätigungsdrucks legt den Grad der Betätigung bzw. das Maß der Bewegung des ersten Kolbens fest und somit den erzeugten Hydraulikdruck an den Radbremsen der beiden Bremskreise.

Die zweite Zylinder-Kolben-Einrichtung kann den ersten Bremskreis und den zweiten Bremskreis auch direkt und damit ohne Zwischenschaltung der ersten Zylinder-Kolben-Einrichtung mit dem in ihr erzeugten Hydraulikdruck beaufschlagen. Die zweite Zylinder-Kolben-Einrichtung ist dementsprechend dazu eingerichtet, die beiden fluidtechnisch voneinander getrennten Bremskreise direkt mit einem vorbestimmten Volumen von Hydraulikfluid und damit mit Hydraulikdruck zu beaufschlagen. Die fluidische Trennung der beiden Bremskreise ist sicherheitstechnisch vorteilhaft. Sollte in einem der Bremskreise ein Fehler oder eine Störung auftreten, wird die Funktion des jeweils anderen Bremskreises nicht beeinträchtigt. Bei einer direkten Beaufschlagung eines der beiden Bremskreise mittels der zweiten Zylinder-Kolben-Einrichtung kann zumindest ein Teil des von der zweiten Zylinder-Kolben-Einrichtung abgegebenen Volumens an Hydraulikfluid der ersten Zylinder-Kolben-Einrichtung zugeführt werden, um sicherzustellen, dass an beiden Bremskreisen zumindest nahezu der gleiche Hydraulikdruck anliegt.

Ein erfasster Bremswunsch des Fahrers oder ein Fahrdynamikregelungsprogramm bestimmen den von der zweiten Zylinder-Kolben-Einrichtung bereitzustellenden Hydraulikdruck. Im Brake-by-Wire-Betrieb der Bremsanlage erfolgt die Betätigung des ersten Kolbens fußkraftunabhängig mit Hilfe des elektromechanischen Aktors, der den zweiten Kolben der zweiten Zylinder-Kolben-Einrichtung betätigt.

Der zweite Kolben der zweiten Zylinder-Kolben-Einrichtung kann den Zylinder der zweiten Zylinder-Kolben-Einrichtung in eine erste Hydraulikkammer und eine zweite Hydraulikkammer unterteilen. In Abhängigkeit der Architektur der Bremsanlage und in Abhängigkeit der Ausgestaltung der zweiten Zylinder-Kolben-Einrichtung ist es möglich die erste Hydraulickammer und die zweite Hydraulikkammer der zweiten Zylinder-Kolben-Einrichtung mit jeweils einem der Bremskreise oder der ersten Zylinder-Kolben-Einrichtung fluidisch zu koppeln. Dementsprechend kann die erste Hydraulikkammer mit der ersten Zylinder-Kolben-Einrichtung fluidisch zu koppeln sein. Alternativ kann die erste Hydraulikkammer mit dem ersten Bremskreis und/oder dem zweiten Bremskreis fluidisch zu koppeln sein. Die zweite Hydraulikkammer kann mit der ersten Zylinder-Kolben-Einrichtung fluidisch zu koppeln sein. Die zweite Hydraulikkammer kann ferner auch mit dem ersten und/oder dem zweiten Bremskreis fluidisch zu koppeln sein.

Zur Volumenänderung der ersten Hydraulikkammer und der zweiten Hydraulikkammer kann der zweite Kolben der zweiten Zylinder-Kolben-Einrichtung in einer ersten Betätigungsrichtung und in einer zweiten Betätigungsrichtung verlagerbar sein. Beispielsweise kann die erste Betätigungsrichtung dem ersten Bremskreis und die zweite Betätigungsrichtung dem zweiten Bremskreis zugeordnet sein. Die erste Betätigungsrichtung kann jedoch auch der ersten Kolben-Zylinder-Einrichtung zugeordnet sein. In diesem Fall kann beispielsweise die zweite Betätigungsrichtung dann dem ersten Bremskreis und dem zweiten Bremskreis zugeordnet sein. Der Strom des Hydraulikfluids kann über Ventilanordnungen gesteuert werden. Der elektrohydraulischen Bremsanlage kann wenigstens eine Sensoreinheit zugeordnet sein. Die wenigstens eine Sensoreinheit kann zum Ermitteln der Position des elektromechanischen Aktors dienen. Die Sensoreinheit kann beispielsweise eine Winkelposition des Aktors erfassen. Mit der von der wenigstens einen Sensoreinheit ermittelten Position kann die Position des zweiten Kolbens innerhalb des Zylinders der zweiten Zylinder-Kolben-Einrichtung bestimmt werden. Dadurch können die Volumina der ersten Hydraulikkammer und der zweiten Hydraulikkammer bzw. die Änderung dieser Volumina ermittelt werden. Die Sensoreinheit kann beispielsweise einen Encoder aufweisen. Ferner kann die Sensoreinheit einen Hallsensor und wenigstens einen Magneten umfassen, wobei der Magnet an einem drehbaren Element des Aktors vorgesehen werden kann. Der Hallsensor kann dann jeweils ein Ausgangssignal abgeben, wenn das Magnetfeld des Magnets auf den Hallsensor einwirkt. Auf diese Weise kann die Position des elektromechanischen Aktors ebenfalls bestimmt werden.

Ferner kann die elektrohydraulische Bremsanlage wenigstens eine Steuereinheit aufweisen. Die Steuereinheit kann zur elektrischen Ansteuerung des elektromechanischen Aktors dienen. Die Steuereinheit kann dazu eingerichtet sein, auf einen Bremswunsch eines Fahrers und/oder auf einen Fahrzustand des Kraftfahrzeuges hinweisende Messgrößen auszuwerten und entsprechende Ansteuerbefehle für den Aktor auszugeben. Basierend auf den ausgewerteten Sensorsignalen kann die Steuereinheit den elektromechanischen Aktor entsprechend ansteuern, um einen Betätigungsdruck in der zweiten Zylinder-Kolben-Einrichtung zu erzeugen. Der Bremswunsch kann durch die Sensoreinheit am Bremspedal oder in einer Pedalschnittstelle erfasst werden und von einer elektronischen Steuereinheit der Bremsanlage in entsprechende Betätigungssignale für den elektromechanischen Aktor umgewandelt werden. Der Bremswunsch kann beispielsweise durch Erfassen eines Bremspedalweges und/oder einer auf das Bremspedal einwirkenden Betätigungskraft bestimmt werden. Das Fahrdynamikregelungsprogramm, wie beispielsweise ein Antiblockiersystem (ABS), eine Antriebsschlupfregelung (ASR), ein elektronischen Stabilitätsprogramm (ESP), auch als Fahrzeugstabilitätsregelung (Vehicle Stability Control, VSC) bezeichnet, oder ein Abstandsregeltempomat (ACC), kann in der elektronischen Steuereinheit hinterlegt sein. Es kann auf Basis erfasster, auf einen Fahrzustand des Fahrzeugs hinweisender Sensordaten Befehle für den elektromechanischen Aktor ausgeben. Im Push-Through-Betrieb erfolgt die Betätigung des wenigstens einen ersten Kolbens der ersten Zylinder-Kolben-Einrichtung fußkraftabhängig.

Die wenigstens eine Steuereinheit kann dazu eingerichtet sein, anhand der Signale der wenigstens einen Sensoreinheit die Position des zweiten Kolbens der zweiten Zylinder-Kolben-Einrichtung zu bestimmen. Die Position des zweiten Kolbens muss insbesondere im Zuge einer Fahrdynamikregelung wie z.B. einem ABS- und/oder ASR- und/oder ESP-Regelbetrieb bestimmbar sein, da bei einer Fahrdynamikregelung Hydraulikfluid über die jeweiligen Bremskreise kontrolliert in das Hydraulikfluidreservoir abgelassen werden. Dementsprechend muss das Hydraulikfluidvolumen in den Bremskreisen bestimmt werden können. Mittels der Sensoreinheit kann die Position des Aktors und damit die Position des zweiten Kolbens in dem Zylinder der zweiten Zylinder-Kolben-Einrichtung ermittelt werden. Mit der Position des zweiten Kolbens können über die Steuereinheit die Volumina der ersten Hydraulikkammer und der zweiten Hydraulikkammer der zweiten Zylinder-Kolben-Einrichtung bestimmt werden. Anhand der Volumina der Hydraulikkammern bzw. anhand der Position des zweiten Kolbens kann nachvollzogen werden, welches Hydraulikfluidvolumen sich derzeit in dem ersten Bremskreis und dem zweiten Bremskreis befindet.

Bei der Betätigung einer der Radbremsen in einem der Bremskreise im Rahmen einer Fahrdynamikregelung (ABS, ESR, ASR) kann sich, wie bereits erwähnt, das Volumen des Hydraulikfluids in dem Bremskreis mit der betätigten Radbremse ändern, da Hydraulikfluid bei der Fahrdynamikregelung kontrolliert in das Hydraulikfluidreservoir abgelassen werden kann. Wird eine Volumenänderung des Hydraulikfluids in einem der Bremskreise anhand der Position des zweiten Kolbens in Verbindung mit der Position des elektromechanischen Aktors erkannt, kann der zweite Kolben von dem Aktor betätigt werden und diese Volumenänderung und die damit einhergehende Hydraulikdruckdifferenz zwischen den Bremskreisen ausgleichen. Befindet sich beispielsweise im zweiten Bremskreis zu wenig Hydraulikfluid bzw. es liegt ein zu geringer Hydraulikdruck an diesem Bremskreis an, kann das fehlende Hydraulikfluidvolumen über den zweiten Kolben über einen Vorhub oder einen Rückhub in die erste Zylinder-Kolben-Einrichtung nachgefördert werden. Der Ausgleich der Hydraulikdruckdifferenz zwischen ersten Bremskreis und zweiten Bremskreis kann bei dem vorgenannten Beispiel auch über einen Druckabbau im ersten Bremskreis mittels des zweiten Kolbens erfolgen.

In diesem Zusammenhang kann die Steuereinheit ferner dazu eingerichtet sein, dass anhand der Signale der wenigstens einen Sensoreinheit die Verteilung des von der zweiten Zylinder-Kolben-Einrichtung abgegebenen Hydraulikfluidvolumens zwischen dem ersten Bremskreis, dem zweiten Bremskreis und/oder der ersten Zylinder-Kolben-Einrichtung festlegbar ist. Mit anderen Worten ist es möglich einen durch einen Kolbenhub des zweiten Kolbens erzeugten Volumenstrom nach den Vorgaben der Steuereinheit aufzuteilen. Ein von einem Kolbenhub erzeugten Volumenstrom kann beispielsweise mit einem Teilvolumenstrom zum Druckaufbau an einer der Radbremsen in einem Bremskreis dienen. Dieser Teilvolumenstrom kann über von der Steuereinheit gesteuerte Ventile variabel größer oder kleiner eingestellt bzw. vergrößert oder verkleinert werden. Der andere Teilvolumenstrom kann in die erste Zylinder-Kolben-Einrichtung gefördert werden. Anders ausgedrückt kann dieser Teilvolumenstrom zum Nachfördern von Hydraulikfluid in die erste Zylinder-Kolben-Einrichtung dienen. Die Verteilung des aus dem Zylinder der zweiten Zylinder-Kolben-Einrichtung verdrängten Volumens kann beispielsweise über eine Ventilanordnung gesteuert werden.

Die wenigstens eine Steuereinheit kann ferner dazu eingerichtet sein, anhand der Signale der wenigstens einen Sensoreinheit die Relativpositionen des ersten Kolbens und eines Sekundärkolbens der ersten Zylinder-Kolben-Einrichtung relativ zueinander zu ermitteln. Die ermittelten Relativpositionen des ersten Kolbens und des Sekundärkolbens der ersten Zylinder-Kolben-Einrichtung werden unter anderem dafür benötigt, in dem ersten Bremskreis und in dem zweiten Bremskreis jeweils den gleichen Hydraulikdruck aufrechtzuerhalten. Die Position des Sekundärkolbens, der schwimmend in dem Zylinder der ersten Zylinder-Kolben-Einrichtung aufgenommen sein kann, kann das Druckverhältnis zwischen den beiden Bremskreisen anzeigen. Mit anderen Worten kann sich die Position des Sekundärkolbens relativ zum ersten Kolben in Abhängigkeit davon verändern, wie oft in den einzelnen Bremskreisen im Rahmen einer Fahrdynamikregelung (ABS, ESR, ASR) Druck auf- bzw. abgebaut wurde. Die Relativpositionen des ersten Kolbens und des Sekundärkolben können beispielsweise mit Hilfe der von der wenigstens einen Sensoreinheit ermittelten Position des elektromechanischen Aktors ermittelt werden. Wurde beispielsweise im zweiten Bremskreis häufiger Druck im Rahmen einer Fahrdynamikregelung (ABS, ESR, ASR) aufgebaut, kann sich die Position des Sekundärkolbens relativ zu dem ersten Kolben verschieben, da der zweite Bremskreis nun weniger Hydraulikfluidvolumen enthält. Dieses fehlende Hydraulikfluidvolumen muss in den zweiten Bremskreis nachgefördert werden. Dieses Nachfördern kann beispielsweise über Druckaufbauvorgänge in dem ersten Bremskreis erfolgen. Dadurch wird die Position des Sekundärkolbens relativ zu dem ersten Kolben verändert, d.h. der Sekundärkolben kann wieder zurück in seine Ausgangsposition überführt werden. Die Nachförderung von Hydraulikfluidvolumen erfolgt für die Bremskreise sequentiell, d.h. zunächst wird ein Volumen in den ersten Bremskreis nachgefördert. Im Anschluss daran wird ein Volumen in den zweiten Bremskreis nachgefördert. Die Reihenfolge der Bremskreise, in die nachgefördert wird, spielt dabei keine Rolle. Es kann zunächst auch in den zweiten Bremskreis nachfördert werden, bevor die Nachförderung in den ersten Bremskreis erfolgt.

Der erste Kolben der ersten Zylinder-Kolben-Einrichtung und die zweite Zylinder-Kolben-Einrichtung können über einen Fluidpfad der Bremsanlage miteinander fluidisch zu koppeln sein. Der erste Kolben und der zweite Kolben können über den Fluidpfad fluidisch in Serie geschaltet sein. Ein bei Betätigung des zweiten Kolbens aus der zweiten Zylinder-Kolben-Einrichtung verdrängtes Hydraulikfluid kann über den Fluidpfad zum ersten Kolben der ersten Zylinder-Kolben-Einrichtung gelangen, wodurch dieser betätigt wird. Eine mechanische Betätigung des zweiten Kolbens kann somit in eine hydraulische Betätigung des ersten Kolbens umgewandelt werden. Da das im Fluidpfad und in der zweiten Zylinder-Kolben-Einrichtung befindliche Hydraulikfluid nicht komprimierbar ist, wird jede elektromechanische Betätigung des zweiten Kolbens in eine entsprechende hydraulische Betätigung des ersten Kolbens verlustfrei übertragen. Insbesondere kann der am betätigten zweiten Kolben anliegende Betätigungsdruck dem am ersten Kolben anliegenden Betätigungsdruck entsprechen.

Die zweite Zylinder-Kolben-Einrichtung kann über einen Fluidpfad direkt mit dem ersten Bremskreis und über einen weiteren Fluidpfad direkt mit dem zweiten Bremskreis verbunden sein. Die Fluidpfade können dabei jeweils wenigstens ein steuerbares Ventil aufweisen. Die Ventile können von der Steuereinheit gesteuert werden. Beispielsweise können in jedem Fluidpfad auch Ventilanordnungen vorgesehen sein, die sich beispielsweise aus einem Rückschlagventil und einem elektrisch betätigbaren bzw. steuerbaren Ventil zusammensetzen. Ein bei Betätigung des zweiten Kolbens aus der zweiten Zylinder-Kolben-Einrichtung verdrängtes Hydraulikfluid kann über den entsprechenden Fluidpfad direkt zum ersten Bremskreis oder direkt zum zweiten Bremskreis gefördert werden, wodurch beispielsweise eine der Radbremsen des entsprechenden Bremskreises betätigt werden kann.

Der zweite Kolben der zweiten Zylinder-Kolben-Einrichtung kann mit einer ersten Wirkfläche und einer zweiten Wirkfläche ausgebildet sein, die jeweils zum Verdrängen von Hydraulikfluid aus dem Zylinder der zweiten Zylinder-Kolben-Einrichtung vorgesehen sind. Die erste Wirkfläche und die zweite Wirkfläche des zweiten Kolbens können von ihrer Fläche her in einem vorbestimmten Verhältnis zueinander stehen. Das Verhältnis kann dabei davon abhängen, ob die entsprechende Wirkfläche einem der Bremskreise oder der ersten Zylinder-Kolben-Einrichtung zugeordnet ist. Beispielsweise kann die erste Wirkfläche des zweiten Kolbens der ersten Zylinder-Kolben-Einrichtung zugeordnet sein. In diesem Fall können der erste Kolben der ersten Zylinder-Kolben-Einrichtung und die erste Wirkfläche des zweiten Kolbens gleich groß sein. Der zweite Kolben kann jedoch auch eine kleinere oder eine größere Wirkfläche als der erste Kolben aufweisen. Über die Abmessungen der Wirkflächen des ersten Kolbens und des zweiten Kolbens kann eine Übersetzung für die auf den ersten Kolben und den zweiten Kolben einwirkenden Betätigungskräfte festgelegt werden. Denn durch die serielle Kopplung des wenigstens einen ersten Kolbens mit dem zweiten Kolben kann auf beide Kolben der in der zweiten Zylinder-Kolben-Einrichtung durch Verschiebung des zweiten Kolbens erzeugte Hydraulikdruck wirken. Die jeweils effektiv am ersten Kolben und am zweiten Kolben anliegende oder aufzubringende Betätigungskraft kann sich dann gerade aus dem Produkt des erzeugten Betätigungsdrucks und der jeweiligen Kolbenfläche ergeben, auf die der Betätigungsdruck wirkt.

Gemäß voranstehendem Beispiel kann die Wirkfläche des zweiten Kolbens gegenüber der Wirkfläche des ersten Kolbens kleiner ausgebildet sein. In diesem Fall kann die bei einem erzeugten Hydraulikdruck am ersten Zylinder anliegende Betätigungskraft um einem aus dem Verhältnis der beiden Wirkflächen des ersten und des zweiten Kolbens berechenbaren Faktor größer sein als die am zweiten Kolben anliegende oder aufzubringende Betätigungskraft. Beispielsweise kann durch die serielle Schaltung eines größeren ersten Kolbens mit einem kleineren zweiten Kolben eine hydraulische Kraftverstärkung erreicht werden. Um einen bestimmten Hydraulikdruck an den Radbremsen aufzubauen, ist am zweiten Kolben lediglich eine Betätigungskraft aufzuwenden, die gerade um den Faktor des Wirkflächenverhältnisses kleiner ist als die am ersten Kolben aufzuwendende Betätigungskraft. Durch die hydraulische Kraftverstärkung kann so das Motormoment sowie die Spindel- und Lagerkräfte des elektromechanischen Aktors kleiner gehalten werden, um einen im Vergleich zu einem unverstärkten System vorgegebenen Hydraulikdruck zu erzeugen.

Die elektrohydraulische Bremsanlage kann ferner eine mit einem Bremspedal koppelbare Pedalschnittstelle mit einer dritten Zylinder-Kolben-Einrichtung umfassen, welche mit der ersten Zylinder-Kolben-Einrichtung zur Hydraulikdruckerzeugung wahlweise koppelbar ist. Im Push-Through-Betrieb der Bremsanlage kann die dritte Zylinder-Kolben-Einrichtung mit der ersten Zylinder-Kolben-Einrichtung gekoppelt sein. Hingegen kann im Brake-by-Wire-Betrieb der Bremsanlage die dritte Zylinder-Kolben-Einrichtung von der ersten Zylinder-Kolben-Einrichtung entkoppelt sein. Die Kopplung kann hierbei mechanisch erfolgen. Beispielsweise kann die Bremsanlage eine mechanische Koppeleinrichtung (oder Kraftübertragungseinrichtung) umfassen, welche dazu ausgebildet ist, den ersten Kolben der ersten Zylinder-Kolben-Einrichtung mit dem dritten Kolben der dritten Zylinder-Kolben-Einrichtung mechanisch zu koppeln.

Der dritte Kolben der dritten Zylinder-Kolben-Einrichtung kann mit dem Bremspedal zu koppeln sein. Auf diese Weise kann die am Bremspedal aufgebrachte Betätigungskraft direkt auf den ersten Kolben übertragen werden. Somit kann im Push-Through-Betrieb der Bremsanlage ein Hydraulikdruck an den mit der ersten Zylinder-Kolben-Einrichtung fluidisch gekoppelten Radbremsen direkt über die am Bremspedal anliegende Fußkraft aufgebaut werden.

In Abhängigkeit der Betätigungssignale oder Befehle kann der elektromechanische Aktor den zweiten Kolben bewegen und so einen hydraulischen Betätigungsdruck für den wenigstens einen ersten Kolben erzeugen. Die Erzeugung des Betätigungsdrucks kann hierbei nicht bloß auf die Erzeugung eines Soll-Druckwertes beschränkt sein, um die Stärke der Betätigung des ersten Kolbens festzulegen. Vielmehr kann über entsprechende Ansteuerung des elektromechanischen Aktors auch die Zeitdauer und/oder die Geschwindigkeit der Betätigung des zweiten Kolbens festgelegt werden. Somit kann auch die Geschwindigkeit und/oder die Zeitdauer der Betätigung des wenigstens einen ersten Kolbens allein über den bereitgestellten Betätigungsdruck (und somit fußkraftunabhängig) festgelegt werden. Durch entsprechende zeitliche Regelung des in der zweiten Zylinder-Kolben-Einrichtung bereitgestellten Betätigungsdruckes kann die hydraulische Betätigung des ersten Kolbens zeitlich gesteuert werden. Es können so beliebige Hydraulikdruckaufbau-, Hydraulikdruckhalte- und/oder Hydraulikdruckabbau-Phasen realisiert werden.

Die erste Zylinder-Kolben-Einrichtung und die dritte Zylinder-Kolben-Einrichtung der Bremsanlage können im montierten Zustand räumlich nacheinander (seriell) angeordnet sein und beispielsweise eine separat handhabbare Baugruppe bilden. Die dem Bremspedal zuordenbare dritte Zylinder-Kolben-Einrichtung kann hierbei vom Bremspedal aus betrachtet vor der ersten Zylinder-Kolben-Einrichtung angeordnet sein. Die dritte Zylinder-Kolben-Einrichtung und die erste Zylinder-Kolben-Einrichtung können koaxial zueinander angeordnet sein.

Ferner können die erste Zylinder-Kolben-Einrichtung und die zweite Zylinder-Kolben-Einrichtung räumlich im Wesentlichen parallel zueinander angeordnet sein und beispielsweise eine separat handhabbare Baugruppe bilden. Mit anderen Worten kann die nacheinander angeordnete erste und dritte Zylinder-Kolben-Einrichtung im Wesentlichen parallel zur zweiten Zylinder-Kolben-Einrichtung angeordnet sein. Auf diese Weise kann die axiale Ausdehnung der Hydraulikdruckerzeuger-Komponenten (also erste, zweite und dritte Zylinder-Kolben-Einrichtung) weiter reduziert werden.

Die voranstehend beschriebene Problemstellung wird ferner durch ein Verfahren zum Betreiben einer elektrohydraulischen Kraftfahrzeug-Bremsanlage gelöst. Die Kraftfahrzeug-Bremsanlage umfasst wenigstens eine erste Zylinder-Kolben-Einrichtung, welche mit wenigstens einer Radbremse der Bremsanlage fluidisch zu koppeln ist, wobei die erste Zylinder-Kolben-Einrichtung wenigstens einen Kolben umfasst, und eine zweite Zylinder-Kolben-Einrichtung mit einem zweiten Kolben und mit einem auf den zweiten Kolben der zweiten Zylinder-Kolben-Einrichtung einwirkenden elektromechanischen Aktor, wobei die zweite Zylinder-Kolben-Einrichtung mit der ersten Zylinder-Kolben-Einrichtung fluidisch zu koppeln ist, und wobei die zweite Zylinder-Kolben-Einrichtung mit dem ersten Bremskreis und/oder dem zweiten Bremskreis fluidisch zu koppeln ist. Das Verfahren umfasst hierbei die Schritte des Detektierens wenigstens eines, auf einen Fahrerbremswunsch oder eine Notwendigkeit eines Fahrdynamikregeleingriffs hinweisenden Parameters, und des Betätigens, mittels des elektromechanischen Aktors, des zweiten Kolbens der zweiten Zylinder-Kolben-Einrichtung in Abhängigkeit des detektierten Parameters, um einen Hydraulikdruck zu erzeugen, der zur Betätigung der ersten Zylinder-Kolben-Einrichtung oder direkt zur Hydraulikdruckbeaufschlagung des ersten Bremskreises oder des zweiten Bremskreis dient.

Ein auf einen Fahrerbremswunsch hinweisender Parameter kann beispielsweise ein Betätigungsweg eines Bremspedals und/oder eine auf das Bremspedal einwirkende Betätigungskraft sein.

Ein auf eine Notwendigkeit eines Fahrdynamikregeleingriffs hinweisender Parameter kann beispielsweise eine Drehrate des Fahrzeuges um eine Fahrzeugachse (z.B. Gierrate), ein Schlupfwert, ein Beschleunigungswert und/oder ein Geschwindigkeitswert wenigstens eines Rads des Kraftfahrzeuges sein. Ein auf eine Notwendigkeit eines Fahrdynamikregeleingriffs hinweisender Parameter kann aber auch ein Abstandswert zu einem anderen Fahrzeug sein. Ein elektronisches Fahrdynamikregelungsprogramm, kann dann in Abhängigkeit des oder der erfassten Parameter entsprechende Befehle für die Betätigung des elektromechanischen Aktor ausgeben. Die Betätigung des elektromechanischen Aktors erfolgt in diesem Fall zur Einstellung eines bestimmten (z.B. stabilen) Fahrzustands. Die Betätigung des elektromechanischen Aktors kann auch dann erfolgen, wenn kein Fahrerbremswunsch detektiert wurde (z.B. bei der Einstellung eines Abstandes zu einem vorausfahrenden Fahrzeug).

Die Betätigung des elektromechanischen Aktors kann proportional zum oder anderweitig abhängig vom erfassten Parameterwert sein. Im Rahmen einer regenerativen Bremsanlage und der Möglichkeit, während eines Bremsvorganges einen Generator zur Energierückgewinnung zuzuschalten, hängt die Betätigung des elektromechanischen Aktors ferner davon ab, ob ein Bremswunsch oder Bremsbefehl durch den Generator umgesetzt werden kann oder soll. Bei einer regenerativen Bremsanlage oder im Rahmen eines regenerativen Bremsbetriebs wird der elektromechanische Aktor beispielsweise dann betätigt, wenn der Bremswunsch oder Bremsbefehl durch den Generator allein nicht umgesetzt werden kann.

Ferner kann das Verfahren einen Schritt umfassen, mit dem die Position des elektromechanischen Aktors und des damit zu koppelnden zweiten Kolbens der zweiten Zylinder-Kolben-Einrichtung ermittelt wird.

Die Relativpositionen des ersten Kolbens und eines Sekundärkolbens der ersten Zylinder-Kolben-Einrichtung relativ zueinander können anhand der ermittelten Position des elektromechanischen Aktors bestimmt werden.

Anhand der ermittelten Position des elektromechanischen Aktors kann das in den ersten Bremskreis und/oder den zweiten Bremskreis nachzufördernden Hydraulikfluidvolumen ermittelt werden.

Auf Grundlage der ermittelten Position des elektromechanischen Aktors kann die Verteilung des von der zweiten Zylinder-Kolben-Einrichtung abgegeben Hydraulikfluidvolumens zwischen dem ersten Bremskreis oder dem zweiten Bremskreis und/oder der ersten Zylinder-Kolben-Einrichtung anhand der ermittelten Position des elektromechanischen Aktors bestimmt werden.

Das ermittelte in den ersten Bremskreis und/oder in den zweiten Bremskreis nachzufördernde Hydraulikfluidvolumen kann in den oder die jeweiligen Bremskreise nachgefördert werden. Die Nachförderung des ermittelten Hydraulikfluidvolumens erfolgt sequentiell in den ersten Bremskreis und in den zweiten Bremskreis, d.h. das Hydraulikfluid wird nacheinander in die Bremskreise gefördert.

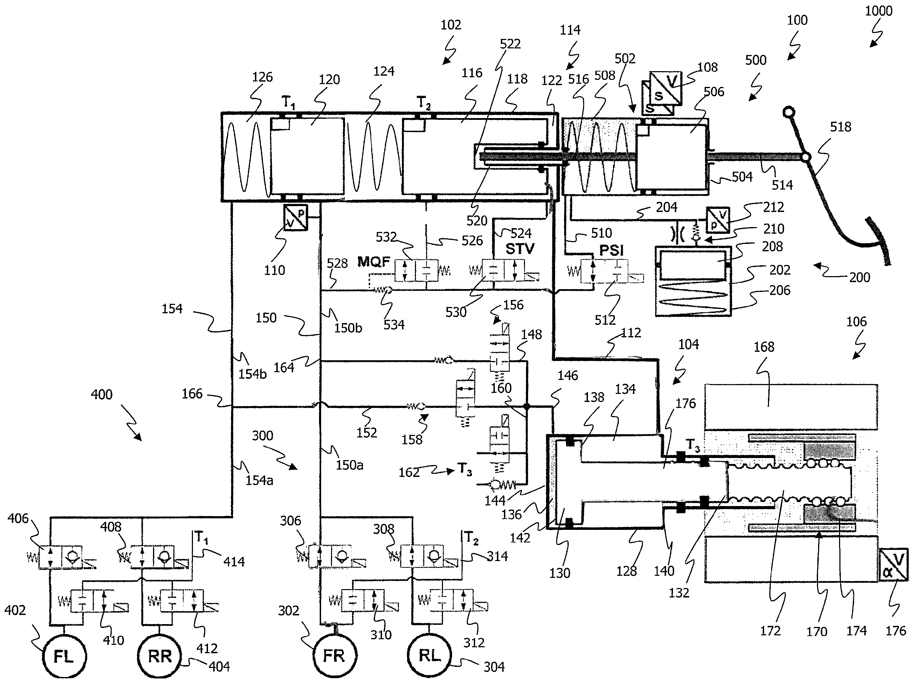

### Kurzbeschreibung der Figur

Weitere Ziele, Merkmale, Vorteile und Anwendungsmöglichkeiten ergeben sich aus der nachfolgenden Beschreibung eines nicht einschränkend zu verstehenden Ausführungsbeispiels mit Bezug auf die zugehörige Figur. Dabei zeigen alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in der Figur gezeigten Komponenten sind hierbei nicht unbedingt maßstäblich; sie können bei zu implementierenden Ausführungsformen vom hier Veranschaulichten abweichen.

Die einzige Figur zeigt ein Ausführungsbeispiel einer elektrohydraulischen Kraftfahrzeug-Bremsanlage.

### Detaillierte Beschreibung der Figur

Die einzige Figur zeigt ein Ausführungsbeispiel einer elektrohydraulischen Kraftfahrzeug-Bremsanlage 1000. In der in der Figur gezeigten Variante handelt es sich um eine zweikreisige Bremsanlage mit einem ersten Bremskreis 300 und einem zweiten Bremskreis 400. Die vorliegende Erfindung hängt nicht von der Anzahl der Bremskreise der Bremsanlage 1000 ab.

Die Bremsanlage 1000 umfasst eine Hydraulikdruckerzeuger-Baugruppe 100, einen Simulatorkreis 200, zwei mit der Hydraulikdruckerzeuger-Baugruppe 100 fluidisch gekoppelte Bremskreise 300, 400, an deren Ende jeweils Radbremsen 302, 304, 402, 404 fluidisch gekoppelt sind, und ein zentrales Hydraulikfluidreservoir (nicht dargestellt). Ferner umfasst die Bremsanlage 1000 eine elektronische Steuereinheit, oder kurz ECU (nicht dargestellt), zur Ansteuerung der Baugruppe 100 und von Ventilen der Bremsanlage 1000.

Im Folgenden wird nun anhand der gezeigten Bremsanlage 1000 der Aufbau und die Funktionsweise der Hydraulikdruckerzeuger-Baugruppe 100 näher erläutert.

Die Hydraulikdruckerzeuger-Baugruppe 100 umfasst eine erste Zylinder-Kolben-Einrichtung 102, eine zweite Zylinder-Kolben-Einrichtung 104 mit einem auf die zweite Zylinder-Kolben-Einrichtung 104 einwirkenden elektromechanischen Aktor 106 sowie Sensoreinheiten 108, 110. Ferner umfasst die Baugruppe 100 einen Fluidpfad 112 zur fluidischen Kopplung der zweiten Zylinder-Kolben-Einrichtung 104 mit der ersten Zylinder-Kolben-Einrichtung 102 sowie eine Kraftübertragungseinrichtung 114 zur wahlweisen Kopplung mit der ersten Zylinder-Kolben-Einrichtung 102. Die Sensoreinheiten 108, 110 dienen zur quantitativen Erfassung eines Fahrerwunsches sowie eines in den Bremskreisen 300, 400 anliegenden Hydraulikdruckes. Die Sensoreinheiten 108, 110 sind mit der ECU (nicht dargestellt) gekoppelt.

Wie im Folgenden noch ausführlicher diskutiert wird, ist die Baugruppe 100 dazu ausgebildet, einen an den Radbremsen 302, 304, 402, 404 erforderlichen Hydraulikdruck durch Betätigung eines ersten Kolbens 116 der ersten Zylinder-Kolben-Einrichtung 102 aufzubauen. Die Betätigung des ersten Kolbens 116 erfolgt in einem Push-Through-Betrieb der Bremsanlage 1000 fußkraftabhängig und in einem Normalbetrieb (oder Brake-by-Wire-Betrieb) der Bremsanlage 1000 fußkraftunabhängig durch hydraulische Kopplung der ersten Zylinder-Kolben-Einrichtung 102 mit der zweiten Zylinder-Kolben-Einrichtung 104. Die Bremsanlage 1000 bzw. die Baugruppe 100 befindet sich üblicherweise im Normalbetrieb und geht nur dann in einen Push-Through-Betrieb über, wenn die erste Zylinder-Kolben-Einrichtung 102 nicht über die zweite Zylinder-Kolben-Einrichtung 104 hydraulisch betätigbar ist. Dies kann beispielsweise dann der Fall sein, wenn der elektromechanische Aktor 106 oder dessen elektronische Ansteuerung nicht ordnungsgemäß arbeitet oder ausfällt (z.B. bei einem Bordnetzausfall).

Es wird zunächst die erste Zylinder-Kolben-Einrichtung 102 und die mit der ersten Zylinder-Kolben-Einrichtung 102 fluidisch gekoppelte zweite Zylinder-Kolben-Einrichtung 104 beschrieben.

Die erste Zylinder-Kolben-Einrichtung 102 umfasst einen in einem ersten Zylinder 118 verschiebbar aufgenommenen ersten Kolben 116 (im folgenden Primärkolben genannt) und einen im ersten Zylinder 118 verschiebbar aufgenommenen zweiten Kolben 120 (im folgenden Sekundärkolben oder Schwimmkolben genannt). Beide Kolben 116, 120 können jeweils mit einer Federeinrichtung gekoppelt sein, welche dazu ausgelegt sind, die beiden Kolben 116, 120 im unbetätigten Zustand in ihre Ausgangsposition zurückzustellen.

Primärkolben 116 und Sekundärkolben 120 sind im ersten Zylinder 118 nacheinander angeordnet (Tandem-Prinzip) und definieren drei Hydraulikkammern 122, 124, 126. Eine erste Hydraulikkammer 122 wird durch eine in Betätigungsrichtung zur Hydraulikdruckerzeugung abgewandten Stirnseite des Primärkolbens 116 (rechte Stirnseite in Fig., im Folgenden Rückseite genannt) und einem der Rückseite des Primärkolbens 116 zugewandten ersten Zylinderboden definiert. Eine zweite Hydraulikkammer 124 wird durch eine in Betätigungsrichtung zur Hydraulikdruckerzeugung zeigende Stirnseite des Primärkolbens 116 (linke Stirnseite des Primärkolbens in Fig.) und durch eine der Betätigungsrichtung zur Hydraulikdruckerzeugung entgegengesetzte Stirnseite des Sekundärkolbens 120 definiert. Ferner wird durch eine in Betätigungsrichtung zur Hydraulikdruckerzeugung zeigende Stirnseite des Sekundärkolbens 120 (linke Stirnseite des Sekundärkolbens 120 in Fig.) und einen zweiten Zylinderboden eine dritte Hydraulikkammer 126 definiert. Somit sind die erste Hydraulikkammer 122 und die zweite Hydraulikkammer 124 über den verschiebbar aufgenommenen Primärkolben 116 voneinander getrennt. Genauso sind die zweite Hydraulikkammern 124 und die dritte Hydraulikkammer 126 über den verschiebbar aufgenommenen Sekundärkolben 120 voneinander getrennt.

Die zweite Hydraulikkammer 124 ist mit dem ersten Bremskreis 300 und die dritte Hydraulickammer 126 mit dem zweiten Bremskreis 400 fluidisch gekoppelt. Ferner stehen die zweite Hydraulikkammer 124 und die dritte Hydraulikkammer 126 in bekannter Weise mit einem drucklosen Hydraulikfluidreservoir fluidisch in Verbindung.

Die erste Hydraulikkammer 122 ist über den Fluidpfad 112 mit der zweiten Zylinder-Kolben-Einrichtung 104 fluidisch gekoppelt. Sie ist jedoch nicht mit einem der Bremskreise 300, 400 fluidisch gekoppelt. Die erste Hydraulikkammer 122 dient dazu, im Brake-by-Wire-Bremsbetrieb ein aus der zweiten Zylinder-Kolben-Einrichtung 104 gefördertes Hydraulikfluidvolumen im Rahmen einer Druckaufbauphase oder Druckhaltephase aufzunehmen bzw. aufgenommenes Hydraulikfluid im Rahmen einer Druckabbauphase wieder an die zweite Zylinder-Kolben-Einrichtung 104 abzugeben.

Die zweite Zylinder-Kolben-Einrichtung 104 umfasst einen in einem zweiten Zylinder 128 verschiebbar aufgenommenen zweiten Kolben 130. Der zweite Kolben 130 ist mit dem elektromechanischen Aktor 106 über einen Kopplungsabschnitt 132 gekoppelt. Der zweite Kolben 130 definiert eine erste Hydraulikammer 134 und eine zweite Hydraulikammer 136 in dem Zylinder 128. Die erste Hydraulikammer 134 wird zwischen der dem Aktor 106 zugewandten Wirkfläche 138 des zweiten Kolbens 130 und einem Zylinderboden 140 festgelegt. Die zweite Hydraulikkammer 136 wird von einer dem elektromechanischen Aktor 106 abgewandten Wirkfläche 142 und einem Zylinderboden 144 festgelegt. Die erste Hydraulikkammer 134 steht ferner über den Fluidpfad 112 mit der ersten Hydraulikkammer 122 der ersten Zylinder-Kolben-Einrichtung 102 in direktem fluidischen Kontakt.

Die zweite Zylinder-Kolben-Einrichtung 104 weist zudem eine direkte fluidische Verbindung zu den beiden Bremskreisen 300, 400 der Bremsanlage 1000 auf. Die zweite Hydraulikfluidkammer 136 ist über die Fluidpfade 146 und 148 mit dem Fluidpfad 150 des ersten Bremskreis 300 direkt fluidisch koppelbar. Zudem ist die zweite Hydraulikfluidkammer 136 über die Fluidpfade 146 und 152 mit dem Fluidpfad 154 des zweiten Bremskreis 400 direkt fluidisch koppelbar. Zur fluidischen Kopplung der zweiten Hydraulikammer 136 mit dem ersten Bremskreis 300 ist in dem Fluidpfad 148 zum ersten Bremskreis 300 eine Ventilanordnung 156 angeordnet. Ferner ist zur fludischen Kopplung mit dem zweiten Bremskreis 400 ist in dem Fluidpfad 152 zum zweiten Bremskreis 400 eine Ventilanordnung 158 vorgesehen. Die Ventilanordnungen 156 und 158 können beispielsweise von einem elektrisch betätigbaren Ventil und einem Rückschlagventil gebildet werden. Das Rückschlagventil soll dabei verhindern, dass Hydraulikfluid aus den Bremskreisen 300, 400 über die Fluidpfade 146, 148, 152 zurück zu der Hydraulikkammer 136 strömen kann. Über den Fluidpfad 146 und den Fluidpfad 160, der eine Ventilanordnung 162 aufweist, kann zudem Hydraulikfluid aus der zweiten Hydraulikkammer 136 in das Hydraulikreservoir (nicht dargestellt) ausgestoßen werden. Der Fluidpfad mit der Ventilanordnung 162 kann zum Abbau eines in der Bremsanlage 1000 aufgebauten Hydraulikdrucks verwendet werden.

Der zweite Kolben 130 wird über den elektromechanischen Aktor 106 betätigt. Konkret ist der elektromechanische Aktor 106 dazu vorgesehen, in Abhängigkeit von der ECU empfangener Ansteuersignale den zweiten Kolben 130 im zweiten Zylinder 128 vor oder zurück zu bewegen. Bei einem Vorhub des Kolbens 130 (Kolben 130 bewegt sich nach rechts in Fig.) wird dabei die vom Aktor 106 aufgebrachte Betätigungskraft auf das Hydraulikfluid in der Hydraulikkammer 134 übertragen. Dadurch wird in der Hydraulikkammer 134 ein Hydraulikdruck erzeugt, welcher gerade dem Verhältnis aus der vom Aktor 106 aufgebrachten Betätigungskraft und der Wirkfläche 138 des zweiten Kolbens 130 entspricht, auf welcher die Betätigungskraft einwirkt. Da die erste Hydraulikkammer 134 über den Fluidpfad 112 mit der ersten Kammer 122 der ersten Zylinder-Kolben-Einrichtung 102 fluidisch gekoppelt ist, wird der in der ersten Hydraulikkammer 134 aufgebaute Hydraulikdruck auf die erste Kammer 122 übertragen. An der Rückseite des Primärkolbens 116 liegt somit der in der Hydraulikkammer 134 der zweiten Zylinder-Kolben-Einrichtung 104 erzeugte Hydraulikdruck als Betätigungsdruck für den Primärkolben 116 an. Der aufgebaute Betätigungsdruck führt zur Verschiebung des Primärkolbens 116 und des damit gekoppelten Sekundärkolbens 120. Durch die Verschiebung des Primärkolbens 116 in Richtung der zweiten Hydraulikkammer 124 nimmt das Volumen der ersten Hydraulikkammer 122 zu, während das Volumen der zweiten Hydraulikkammer 124 und der dritten Hydraulikkammer 126 der ersten Zylinder-Kolben-Einrichtung 102 abnimmt. Das zunehmende Volumen der ersten Hydraulikkammer 122 wird aufgrund der Betätigung des zweiten Kolbens 130 kontinuierlich mit aus der Hydraulikkammer 134 der zweiten Zylinder-Kolben-Anordnung 104 verdrängtem Hydraulikfluid gespeist, so dass der Betätigungsdruck an der Rückseite des Primärkolbens 116 stets aufrecht erhalten bleibt.

Die Verschiebung des Primärkolbens 116 hat zur Folge, dass der Hydraulikdruck in der zweiten und dritten Kammer 124, 126 und in den damit gekoppelten Bremskreisen 300, 400 und Radbremsen 302, 304 und 402, 404 stetig zunimmt. Die Verschiebung des Primärkolbens 116 hält so lange an, bis sich in den mit den Radbremsen 302, 304 und 402, 404 über die Fluidpfade 150, 154 fluidisch gekoppelten Hydraulikkammern 124, 126 ein Hydraulikdruck eingestellt hat, welcher dem Betätigungsdruck in der ersten Hydraulikkammer 122 der ersten Zylinder-Kolben-Einrichtung 102 bzw. in der ersten Hydraulikkammer 134 der zweiten Zylinder-Kolben-Einrichtung 104 entspricht. Somit entspricht der durch hydraulische Betätigung des Primärkolbens 116 erzeugte Hydraulikdruck an den Radbremsen 302, 304 und 402, 404 dem erzeugten Betätigungsdruck in der zweiten Zylinder-Kolben-Einrichtung 104.

Umgekehrt nimmt bei einem Rückhub des zweiten Kolbens 130 der Betätigungsdruck in der ersten Hydraulikkammer 134 ab, so dass Hydraulikfluid aus der ersten Hydraulikkammer 122 der ersten Zylinder-Kolben-Einrichtung 102 über den Fluidpfad 112 wieder in die erste Hydraulikkammer 134 der zweiten Zylinder-Kolben-Einrichtung 104 zurückströmen kann. Bei einem Rückhub des zweiten Kolbens 130 kann jedoch auch einer der Bremskreise 300 und 400 direkt mit Hydraulikfluid aus der zweiten Hydraulikkammer 136 der zweiten Zylinder-Kolben-Einrichtung 104 beaufschlagt werden. Bei einem Rückhub des Kolbens 130 (Kolben 130 bewegt sich nach links in der Fig.) wird dabei die vom Aktor 106 aufgebrachte Betätigungskraft auf das Hydraulikfluid in der Hydraulikkammer 136 übertragen. Dadurch wird in der Hydraulikkammer 136 ein Hydraulikdruck erzeugt, welcher gerade dem Verhältnis aus der vom Aktor 106 aufgebrachten Betätigungskraft und der Wirkfläche 138 des zweiten Kolbens 130 entspricht, auf welcher die Betätigungskraft einwirkt. Da die erste Hydraulickammer 136 über die Fluidpfade 146, 148, 150, 152 und 154 mit dem ersten Bremskreis 300 oder dem zweiten Bremskreis 400 fluidisch koppelbar ist, kann der von der zweiten Zylinder-Kolben-Einrichtung 104 bei einem Rückhub des Kolbens 130 erzeugte Hydraulikdruck direkt auf einen der Bremskreise 300, 400 übertragen werden. Mit welchem der Bremskreise 300, 400 die zweite Hydraulikkammer 136 gekoppelt werden soll, hängt von den Stellungen der Ventilanordnungen 156 und 158 ab, die von der ECU gesteuert werden.

Bei einem Rückhub des zweiten Kolbens 130 kann der Volumenstrom des Hydraulikfluids an einem Verzweigungspunkt 164 zwischen dem Fluidpfaden 148, 150 und an einem Verzweigungspunkt 166 zwischen Fluidpfaden 152, 154 aufgeteilt werden. Beispielsweise kann bei einer Ansteuerung der Radbremse 302 der von der zweiten Hydraulikkammer 136 abgegebene Volumenstrom von Hydraulikfluid zu einem variablen Volumenstromanteil über die Pfade 146, 148, den Verzweigungspunkt 166 und den Pfadabschnitt 150a der Radbremse 302 zugeführt werden. Die Größe dieses Volumenstromanteils kann über die Ventile 306 und 308, die den Radbremsen 302 und 304 zugeordnet sind, variabel gesteuert bzw. eingestellt werden. Der andere Volumenstromanteil kann über Pfade 146, 148, den Verzweigungspunkt 166 und den Pfad 150b der zweiten Hydraulikkammer 124 der ersten Zylinder-Kolben-Einrichtung 102 zugeführt werden. Dieser Volumenstromanteil dient zum Nachfördern von Hydraulikfluid in die zweite Hydraulikkammer 124, um den Fluiddruck in dem Bremskreisen 300, 400 aufrechtzuerhalten zu können.

Gleiches ist auch in dem zweiten Bremskreis 400 möglich. Der Volumenstrom kann im zweiten Bremskreis 400 an dem Verzweigungspunkt 166 zwischen dem Fluidpfad 152 und dem Fluidpfad 154 aufgeteilt und über den Pfad 154b teilweise der Hydraulikkammer 126 und über den Pfad 154a teilweise einer der Radbremsen 402 oder 404 zugeführt werden.

Da die Hydraulikkammern 134, 136 der zweiten Zylinder-Kolben-Einrichtung 104 jederzeit vollständig mit Hydraulikfluid gefüllt sind und Hydraulikfluid nicht komprimierbar ist, wird der in der Kammern 134, 136 aufgebaute Betätigungsdruck ohne Druckabnahme und ohne zeitliche Verzögerung (Retardierung) auf den Primärkolben 116 oder die beiden Bremskreise 300 und 400 übertragen. Mit anderen Worten wird jeder Betätigungsdruck in den Hydraulickammern 134, 136 verlustfrei auf den Primärkolben 116 oder auf einen der Bremskreise 300, 400 übertragen, so dass dieser entsprechend betätigt wird. Wird beispielsweise ein Betätigungsdruck durch einen Vorhub des Kolbens 130 aufgebaut, so wird aufgrund des einwirkenden Betätigungsdrucks eine entsprechende Verschiebung des Primärkolbens 116 erfolgen und ein entsprechender Hydraulikdruck an den Radbremsen 302, 304 bzw. 402, 404 aufgebaut. Wird beispielsweise ein aufgebauter Betätigungsdruck durch einen Rückhub des Kolbens 130 abgebaut, so wird der Primärkolben 116 entsprechend zurückbewegt und der Hydraulikdruck an den Radbremsen 302, 304 bzw. 402, 404 entsprechend abgebaut oder vermindert. Wie bereits erwähnt, kann über einen Rückhub des Kolbens 130 in der Hydraulikkammer 136 auch einer der beiden Bremskreise 300, 400 direkt mit Betätigungsdruck zum Betätigen einer der Radbremsen 302, 304 bzw. 402, 404 beaufschlagt werden. In diesem Fall wird jedoch gleichzeitig auch Hydraulikfluid in die erste Zylinder-Kolben-Anordnung 102 gefördert, so dass die Kolben 116 und 120 der ersten Zylinder-Kolben-Einrichtung 102 verschoben werden und ihre vorbestimmten Positionen einnehmen können. Die Stärke der Betätigungsdrucks hängt von dem elektromechanischen Aktor 106 und dem zweiten Kolben 130 ab. Durch die vorliegende serielle hydraulische Kopplung der ersten Zylinder-Kolben-Einrichtung 102 mit der zweiten Zylinder-Kolben-Einrichtung 104 kann ein Hydraulikdruck an den Radbremsen 302, 304 bzw. 402, 404 verlustfrei und genauso schnell erzeugt bzw. eingestellt werden, wie wenn der elektromechanische Aktor 106 unmittelbar mit dem ersten Primärkolben 116 gekoppelt wäre und eine Betätigung des Primärkolbens 116 direkt durch den elektromechanischen Aktor 106 erfolgen würde.

Die Kopplung des elektromechanischen Aktors 106 mit einer mit der ersten Zylinder-Kolben-Einrichtung 102 fluidisch gekoppelten zweiten Zylinder-Kolben-Einrichtung 104 anstatt einer direkten Kopplung des elektromechanischen Aktors 106 mit der ersten Zylinder-Kolben-Einrichtung 102 ermöglicht ferner eine Übersetzung der am Primärkolben 116 bereitzustellenden Betätigungskraft. Denn zu jedem gewünschten Hydraulikdruck an den Radbremsen 302, 304 bzw. 402, 404 muss am Primärkolben 116 bzw. am Sekundärkolben 120 eine bestimmte Betätigungskraft aufgebracht werden, welche dem Produkt aus dem zu erzeugenden Hydraulikdruck und einer effektiven Kolbenfläche des Primärkolbens 116 entspricht, auf welcher der Hydraulikdruck wirkt (Wirkfläche). Je größer hierbei die Wirkfläche des Primärkolbens 116 ist, desto größer ist die aufzubringende Betätigungskraft.

Der elektromechanische Aktor 106 umfasst einen Elektromotor 168 sowie einen mit dem Elektromotor 168 gekoppelte Kugelgewindetrieb 170, der als Getriebe dient. Der Kugelgewindetrieb 170 weist eine Spindel 172 und eine Mutter 174 auf, die über eine Kugelanordnung miteinander gekoppelt sind. Ein Rotor (nicht dargestellt) des Elektromotors 168 ist drehfest mit der Mutter 174 gekoppelt, um diese in Drehung zu versetzen. Eine Drehbewegung der Mutter 174 überträgt sich derart auf die Spindel 172, dass die Spindel 172 axial verschoben wird. Die in der Figur linke Stirnseite der Spindel 172 ist mit dem zweiten Kolben 130 mechanisch gekoppelt. Eine axiale Verschiebung der Spindel 172 überträgt sich somit unmittelbar auf den zweiten Kolben 130, wobei dieser im zweiten Zylinder 128 entlang des Zylinders 128 verschoben wird. Der zweite Kolben 130 weist einen Kolbenstangenabschnitt 186 mit dem Kopplungsabschnitt 132 auf, der mit der Spindel 172 gekoppelt ist. Im zweiten Zylinder 128 wird die erste Hydraulikammer 134 um die Kolbenstange 186 herum zwischen der Wirkfläche 138 und der Zylinderwand 140 definiert. Die Kolbenstange 174 endet an der Wirkfläche 138 des Kolbens 130.

An dem Elektromotor 168 ist eine Sensoreinheit 176 vorgesehen, mit der die Position des Motors 168 erfasst werden kann. Die Sensoreinheit 176 kann beispielsweise einen Encoder aufweisen, der einen Drehwinkel des Motors 168 erfassen kann. Anhand der Position des Motors 168 kann die Position des zweiten Kolbens 130 bestimmt werden. Die Position des zweiten Kolbens 130 gibt ferner Auskunft darüber, wie sich die Volumina in den Bremskreisen 300, 400 entwickelt und welche Positionen der erste Kolben 116 und der zweite Kolben 120 in dem ersten Zylinder 118 eingenommen haben. Die Sensoreinheit 176 kann mit der ECU verbunden sein.

Im Folgenden wird nun eine Pedalschnittstelle 500 mit einer dritten Zylinder-Kolben-Einrichtung 502 sowie die fußkraftabhängige Betätigung der Kolben 116, 120 der ersten Zylinder-Kolben-Einrichtung 102 mit Hilfe der Pedalschnittstelle 500 näher beschrieben.

Die Pedalschnittstelle 500 umfasst einen dritten Hydraulikzylinder 504 mit einem darin verschiebbar aufgenommenen dritten Kolben 506. Zylinder 504 und Kolben 506 definieren wiederum eine Hydraulikkammer 508, welche mit dem Simulatorkreis 200 der Bremsanlage 1000 fluidisch gekoppelt ist. Ferner ist die Hydraulikkammer 508 über einen Fluidpfad 510 und einer darin aufgenommenen Ventilanordnung 512 wahlweise mit dem zentralen Hydraulikfluidreservoir (nicht gezeigt), mit der Hydraulikkammer 122 oder dem ersten Bremskreis 300 fluidisch zu koppeln.

Der dritte Kolben 506 ist ferner mit einem ersten Stößel 514 und mit einem zweiten Stößel 516 versehen. Der erste Stößel 514 ist mit einem ersten Ende an einer einem Bremspedal 518 zugewandten Stirnseite des dritten Kolbens 506 befestigt. Ein zweites Ende des ersten Stößels 514 ist mit einem Bremspedal 518 mechanisch gekoppelt. Auf diese Weise kann eine Pedalbetätigung (d.h. ein Niederdrücken des Bremspedals 518) auf den dritten Kolben 506 übertragen werden, welcher dann in Fahrtrichtung (in Fig. nach links) verschoben wird. Der zweite Stößel 516 ist an einer der Fahrtrichtung zugewandten Stirnseite des dritten Kolbens 506 befestigt.

Der erste Zylinder 118 der ersten Zylinder-Kolben-Einrichtung 102 weist einen rohrförmigen Schacht 520 zur Aufnahme des aus der dritten Zylinder-Kolben-Einrichtung 502 herausragenden Stößels 516 auf. Im montierten Zustand ragt der Stößels 516 in den Schacht 520 der ersten Zylinder-Kolben-Einrichtung 102 hinein und ist vom Primärkolben 116 lediglich durch eine schmale Lücke 522 räumlich getrennt. Der Primärkolben 116 weist in der gezeigten Ausgestaltung an seiner Rückseite ein U-förmiges Profil auf, wobei der Schacht 520 in der U-förmigen Ausnehmung des Primärkolbens 116 hineinragt. Die Hydraulikkammer 122 wird durch die Kolbenrückseite und die Innenwand des ersten Zylinders 118 und des Schachts 520 definiert.

Der Stößel 516 dient als Kraftübertragungseinrichtung zur Übertragung einer Fußkraft auf den Primärkolben 116 in einem Push-Through-Betrieb. Im Push-Through-Betrieb findet keine elektrohydraulische Betätigung des Primärkolbens 116 statt. Die Lücke 522 zwischen dem Stößel 516 und der Rückseite des Primärkolbens 116 kann bei Niederdrücken des Pedals 518 schnell überwunden werden. Der zweite Stößel 516 gelangt in Anlage mit dem Primärkolben 116 und überträgt jede weitere Bewegung des Pedals 518 direkt auf den Primärkolben 116, wodurch ein Hydraulikdruck in der ersten Zylinder-Kolben-Einrichtung 102 aufgebaut werden kann. Im Brake-by-Wire-Betrieb erfolgt die Betätigung des Primärkolbens 116 durch den in der zweiten Zylinder-Kolben-Einrichtung 104 aufgebauten Betätigungsdruck. Die hydraulische Betätigung des Primärkolbens 116 bewirkt, dass der Primärkolben 116 dem Stößel 516 genügend vorauseilt, so dass im Brake-by-Wire-Betrieb durch Niederdrücken des Bremspedals 518 die Lücke 522 nicht überwunden werden kann. Auf diese Weise kann garantiert werden, dass im Brake-by-Wire-Betrieb der Hydraulikdruck ausschließlich mit Hilfe der zweiten Zylinder-Kolben-Einrichtung 104 aufgebaut bzw. eingestellt wird.

Der Fluidpfad 510 teilt sich nach dem Ventil 512 in drei Zweige 524, 526, 528 auf. Der erste Zweig 524 führt über ein Ventil 530 in die Hydraulikammer 122 der ersten Zylinder-Kolben-Einrichtung 102. Der zweite Zweig 526 führt über das Ventil 532 in das Hydraulikreservoir. Der dritte Zweig 528 mündet in den Fluidpfad 150 des ersten Bremskreises. Ein Überdruckventil 534 ist in dem dritten Zweig 528 angeordnet. Im Normalbetrieb der Bremsanlage 1000 ist das Ventil 512 in einen geschlossen Zustand geschaltet, so dass den nachgeordneten Ventilen 530, 532, 534 keine Bedeutung zukommt.

Bei einem Push-Through-Bremsbetrieb bleibt das Ventil 512 unbetätigt und somit in einer geöffneten Ventilstellung. Ein aus dem Hydraulikzylinder 504 verdrängtes Hydraulikfluid im Push-Through-Betrieb kann dann über das geöffnete Ventil 512 zu den stromabwärts angeordneten Ventilen 530, 532, 534 strömen und über diese Ventile (abhängig vom Hydraulikdruck im ersten Bremskreis 300) in den ersten Bremskreis 300, in die Hydraulikkammer 122 oder in das Hydraulikfluidreservoir abfließen.

Über das Ventil 530 kann in dessen geöffneten Zustand im Push-Through-Bremsbetrieb Hydraulikfluid in die Hydraulikkammer 122 geleitet werden, um eine Verschiebung des Kolbens 116 in Betätigungsrichtung im Push-Through-Bremsbetrieb zu unterstützen.

Das Ventil 532 schaltet bei Erreichen eines vorgegebenen Drucks in der ersten Zylinder-Kolben-Einrichtung 102 oder im ersten Bremskreis 300 von einem geschlossenen Zustand in einen geöffneten Zustand. Das Ventil 532 ist zu Steuerungszwecken mit dem ersten Bremskreis 300 fluidisch gekoppelt (siehe gestrichelte Linie am Ventil 532 in Fig.). Bei Erreichen des vorgegebenen Druckes im ersten Bremskreis 300 schaltet das Ventil 532 in eine geöffnete Ventilstellung. Das während des Push-Through-Betriebs im Fluidpfad 510 und an den Ventileinlässen der Ventile 532, 534 aufgestaute Hydraulikfluid kann dann über den zweiten Teilpfad 526 drucklos in das drucklose Hydraulikfluidreservoir abströmen. Das zweite Ventil 532 legt somit fest, wie lange Hydraulikfluid aus der dritten Zylinder-Kolben-Einrichtung 502 in die Bremskreise 300, 400 eingespeist wird. Insbesondere verhindert das Ventil 532, ein unnötiges Aufstauen von Hydraulikfluid am Ventil 534, wenn beispielsweise während der Push-Through-Phase der in der ersten Zylinder-Kolben-Einrichtung 102 erzeugte Druck sich an den im dritten Zylinder 504 erzeugten Druck annähert oder gar übersteigt.

Das Ventil 534 ist in der Gestalt eines Rückschlagventils ausgebildet. Das Rückschlagventil 534 ist derart angeordnet, dass es bei geöffneter Ventilstellung lediglich Hydraulikfluid vom Hydraulikzylinder 504 in den ersten Bremskreis 300 strömen lässt, jedoch in umgekehrter Richtung absolut sperrt. Das erste Rückschlagventil 534 ist als federbelastetes Rückschlagventil ausgebildet. Somit kann im Push-Through-Betrieb Hydraulikfluid aus dem dritten Hydraulikzylinder 504 über das Ventil 512 (dieses ist im Push-Through-Betrieb geöffnet) und das nachgeschaltete Rückschlagventil 534 in den ersten Bremskreis 300 (und über die damit fluidisch gekoppelte erste Zylinder-Kolben-Einrichtung 102 auch in den zweiten Bremskreis 400) immer dann eingespeist werden, wenn der durch Verschieben des dritten Kolbens 506 im dritten Zylinder 504 erzeugte Hydraulikdruck höher als der Ventilüberströmdruck und der am Ventilauslass des Rückschlagventils 534 anliegende Hydraulikdruck ist.

Im Folgenden wird der Simulatorkreis 200 beschrieben. Der Simulatorkreis 200 ist mit der dritten Zylinder-Kolben-Einrichtung 502 fluidisch gekoppelt. Der Simulatorkreis 200 umfasst einen Hydraulikdruckspeicher 202, welcher über einen Fluidpfad 204 (und einem darin angeordneten Drosselventil oder Drosselrückschlagventil) mit der Kammer 508 fluidisch gekoppelt ist. Der Hydraulikdruckspeicher 202 ist als Kolben-Zylinder-Anordnung realisiert, wobei der im Zylinder 206 verschiebbar aufgenommene Kolben 208 durch eine Feder vorgespannt ist. Bei Betätigung des Bremspedals 518 im Normalbetrieb (der dritte Kolben 506 ist mit dem Primärkolben 116 nicht gekoppelt, so dass keine Gegenkraft auf das Bremspedal 518 zurückwirkt) wird das aus der Kammer 508 geförderte Hydraulikfluid über den Fluidpfad 204 in den Hydraulikdruckspeicher 202 geleitet. Das in den Hydraulikdruckspeicher 202 strömende Fluid verschiebt dabei den durch die Feder vorgespannten Kolben 208. Die für die Verschiebung des Kolbens 208 aufzubringende Kraft wirkt als Pedalrückstellkraft auf das Bremspedal 516 zurück. Mit anderen Worten generiert der Hydraulikdruckspeicher 202 einen Gegendruck, welcher auf den dritten Kolben 506 und auf das Bremspedal 518 zurückwirkt. Auf diese Weise wird im Brake-by-Wire-Betrieb eine auf das Bremspedal 518 einwirkende Gegenkraft erzeugt, welche nicht vom Druckaufbau in der ersten Zylinder-Kolben-Einrichtung 102 herrührt, da die dritte Zylinder-Kolben-Einrichtung 502 von der ersten Zylinder-Kolben-Einrichtung 102 entkoppelt ist. Im Fluidpfad 204 sind eine Ventilanordnung 210 und eine Sensoreinheit 212 vorgesehen.

Im Push-Through-Betrieb ist der dritte Kolben 506 mit dem Primärkolben 116 gekoppelt.

Das Pedalrückwirkverhalten wird durch den vom Primärkolben 116 erzeugten Hydraulikdruck bestimmt. Ein Rückwirkverhalten braucht in diesem Fall nicht simuliert werden. Das aus der Kammer 508 verdrängte Hydraulikfluid kann über die Ventilanordnung 512 in das Hydraulikfluidreservoir (nicht gezeigt), die Hydraulikkammer 122 oder den ersten Bremskreis 300 abgeleitet werden.

Die Bremsanlage 1000 umfasst eine erste Gruppe von vier elektrisch betätigbaren Ventilen 306, 308, 406, 408, wobei jeder Radbremse 302, 304, 402, 404 genau ein Ventil 306, 308, 406, 408 zugeordnet ist. Das einer jeden Radbremse 302, 304, 402, 404 zugeordnete Ventil 306, 308, 406, 408 ist dazu ausgelegt, die Radbremse 302, 304, 402, 404 je nach Schaltzustand des Ventils 306, 308, 406, 408, von der ersten Zylinder-Kolben-Einrichtung 102 oder von der zweiten Zylinder-Kolben-Einrichtung 104 hydraulisch zu koppeln oder hydraulisch zu entkoppeln. Die zeitliche Ansteuerung der einzelnen Ventile 306, 308, 406, 408 erfolgt hierbei über die ECU.

Beispielsweise können die Ventile 306, 308, 406, 408 durch die ECU in einem ZeitmultiplexBetrieb betätigt werden. Dabei kann jedem Ventil 306, 308, 406, 408 (und damit jeder Radbremse 302, 304, 402, 404) wenigstens ein Zeitschlitz für eine Ventilbetätigung zugeordnet sein. Diese Zuordnung schließt dabei nicht aus, dass einzelne Ventile 306, 308, 406, 408 über mehrere Zeitschlitze hinweg geöffnet oder geschlossen gehalten werden oder mehr als zwei Ventile gleichzeitig geöffnet sind. Auf diese Weise kann bei einer Betriebsbremsung (wenn die Baugruppe 100 im Normalbetrieb ist) der durch die Aktor-Baugruppe 100 aufgebaute Hydraulikdruck an den Radbremsen 302, 304, 402, 404 radindividuell oder radgruppenindividuell zum Zweck einer Fahrdynamikregelung (also z.B. im ABS- und/oder ASR- und/oder ESP-Regelbetrieb) eingeregelt werden.

Die Bremsanlage 1000 umfasst ferner eine zweite Gruppe von vier Ventilen 310, 312, 410, 412, wobei jeder Radbremse 302, 304, 402, 404 genau ein Ventil 310, 312, 410, 412 zugeordnet ist. Die Ventile 310, 312, 410, 412 sind hierbei in Rückleitungen 314, 414 der Radbremsen 302, 304, 402, 404 angeordnet. Die Rückleitungen 314, 414 münden in das Hydraulikfluidreservoir (nicht gezeigt). Die beiden Ventile 310, 312, 410, 412 nehmen im unbetätigten Zustand jeweils eine geschlossene Ventilstellung ein, so dass kein Hydraulikfluid von den jeweiligen Radbremsen 302, 304, 402, 404 in das drucklose Hydraulikfluidreservoir (nicht gezeigt) strömen kann. Sie können im Zuge einer Fahrdynamikregelung (z.B. ABS- und/oder ASR- und/oder ESP-Regelbetrieb) mittels elektrischer Ansteuerung der ECU in eine geöffnete Ventilstellung geschaltet werden, um Hydraulikfluid über die jeweiligen Bremskreise in das drucklose Hydraulikfluidreservoir kontrolliert abfließen zu lassen.

Zusammenfassend bleibt festzuhalten, dass die hier beschriebene Bremsanlage 1000 mit der Hydraulikdruckerzeuger-Baugruppe 100 für die Realisierung eines Brake-by-Wire-Bremsbetriebes und eines Push-Through-Bremsbetriebes ausgebildet ist. Die Bremsanlage 1000 verfügt über fluidisch vollständig getrennte Bremskreise 300, 400. Die Bremsanlage 1000 ist dabei derart aufgebaut, dass in beiden fluidisch getrennten Bremskreisen 300, 400 jeweils ein vorbestimmter Hydraulikdruck aufrechterhalten wird.

## Patentansprüche

1. Elektrohydraulische Kraftfahrzeug-Bremsanlage (1000), umfassend:
einen ersten Bremskreis (300) mit wenigstens einer Radbremse (302, 304),
einen zweiten Bremskreis (400) mit wenigstens einer Radbremse (402, 404),
eine mit wenigstens einem von ersten oder zweiten Bremskreis (300, 400) fluidisch zu koppelnde erste Zylinder-Kolben-Einrichtung (102) zur Hydraulikdruckerzeugung in wenigstens einem von ersten und zweiten Bremskreis (300, 400), wobei die erste Zylinder-Kolben-Einrichtung (102) wenigstens einen ersten Kolben (116) umfasst,
eine zweite Zylinder-Kolben-Einrichtung (104), die wenigstens einen zweiten Kolben (130) umfasst, und
einen auf den zweiten Kolben (130) der zweiten Zylinder-Kolben-Einrichtung (104) einwirkenden elektromechanischen Aktor (106),
wobei die zweite Zylinder-Kolben-Einrichtung (104) mit der ersten Zylinder-Kolben-Einrichtung (102) fluidisch zu koppeln ist, um einen bei Betätigung des elektromechanischen Aktors (106) in der zweiten Zylinder-Kolben-Einrichtung (104) erzeugten Hydraulikdruck für eine Betätigung der ersten Zylinder-Kolben-Einrichtung (102) bereitzustellen, und wobei die zweite Zylinder-Kolben-Einrichtung (104) derart mit dem ersten Bremskreis (300) und/oder dem zweiten Bremskreis (400) fluidisch zu koppeln ist, dass bei Betätigung des elektromechanischen Aktors (106) der zweiten Zylinder-Kolben-Einrichtung (104) der erste und/oder der zweite Bremskreis (300, 400) direkt mit einem in der zweiten Zylinder-Kolben-Einrichtung (104) erzeugten Hydraulikdruck zu beaufschlagen sind,
wobei der zweite Kolben der zweiten Zylinder-Kolben-Einrichtung (104) den Zylinder (118) der zweiten Zylinder-Kolben-Einrichtung (104) in eine erste Hydraulikkammer (134) und eine zweite Hydraulikkammer (136) unterteilt,
wobei zur Volumenänderung der ersten Hydraulikkammer (134) und der zweiten Hydraulikkammer (136) der zweite Kolben (130) der zweiten Zylinder-Kolben-Einrichtung (104) in einer ersten Betätigungsrichtung und in einer zweiten Betätigungsrichtung verlagerbar ist.

2. Elektrohydraulische Bremsanlage (1000) nach Anspruch 1,
wobei die erste Hydraulikkammer (134) mit der ersten Zylinder-Kolben-Einrichtung (102) fluidisch zu koppeln ist.

3. Elektrohydraulische Bremsanlage (1000) nach Anspruch 1 oder 2,
wobei die zweite Hydraulikkammer (136) mit dem ersten und/oder dem zweiten Bremskreis (300, 400) fluidisch zu koppeln ist.

4. Elektrohydraulische Bremsanlage (1000) nach einem der Ansprüche 1 bis 3,
wobei die erste Hydraulikkammer (134) mit dem ersten Bremskreis (300) und/oder dem zweiten Bremskreis (400) fluidisch zu koppeln ist.

5. Elektrohydraulische Bremsanlage (1000) nach einem der Ansprüche 1 bis 4,
wobei die zweite Hydraulikkammer (136) mit der ersten Zylinder-Kolben-Einrichtung (102) fluidisch zu koppeln ist.

6. Elektrohydraulische Bremsanlage (1000) nach einem der Ansprüche 1 bis 5,
wobei wenigstens eine Sensoreinheit (108, 110, 176) vorgesehen ist, die die Position des elektromechanischen Aktors (106) ermittelt.

7. Elektrohydraulische Bremsanlage (1000) nach einem der Ansprüche 1 bis 6,
wobei wenigstens eine Steuereinheit (ECU) dazu eingerichtet ist, anhand der Signale der wenigstens einen Sensoreinheit (108, 110, 176) die Relativpositionen des ersten Kolbens (116) und eines Sekundärkolbens (120) der ersten Zylinder-Kolben-Einrichtung (102) relativ zueinander zu ermitteln.

8. Elektrohydraulische Bremsanlage (1000) nach einem der Ansprüche 1 bis 7,
wobei die wenigstens eine Steuereinheit (ECU) dazu eingerichtet ist, anhand der Signale der wenigstens einen Sensoreinheit (108, 110, 176) die Position des zweiten Kolbens (130) der zweiten Zylinder-Kolben-Einrichtung (104) zu bestimmen.

9. Elektrohydraulische Bremsanlage (1000) nach einem der Ansprüche 7 oder 8,
wobei die Steuereinheit dazu eingerichtet ist, anhand der Signale der wenigstens einen Sensoreinheit (108, 110, 176) die Verteilung des von der zweiten Zylinder-Kolben-Einrichtung (104) abgegebenen Hydraulikfluidvolumens zwischen dem ersten Bremskreis (300) oder dem zweiten Bremskreis (400) und/oder der ersten Zylinder-Kolben-Einrichtung (102) festzulegen.

10. Elektrohydraulische Bremsanlage (1000) nach einem der Ansprüche 1 bis 9, wobei die erste Zylinder-Kolben-Einrichtung (102) und die zweite Zylinder-Kolben-Einrichtung (104) über einen Fluidpfad (112) fluidisch in Serie geschaltet sind.

11. Elektrohydraulische Bremsanlage (1000) nach einem der Ansprüche 1 bis 10, wobei die zweite Zylinder-Kolben-Einrichtung (104) über einen Fluidpfad (146, 148) direkt mit dem ersten Bremskreis (300) und über einen weiteren Fluidpfad (146, 152) direkt mit dem zweiten Bremskreis (400) verbunden ist, wobei jeder der Fluidpfade (148, 152) wenigstens ein steuerbares Ventil (156, 158) aufweist.

12. Verfahren zum Betreiben einer elektrohydraulischen Kraftfahrzeug-Bremsanlage (1000) mit einer mit einem ersten Bremskreis (300) und einem zweiten Bremskreis (400) fluidisch zu koppelnden ersten Zylinder-Kolben-Einrichtung (102) zur Hydraulikdruckerzeugung in wenigstens einem der beiden Bremskreise (300, 400), wobei die erste Zylinder-Kolben-Einrichtung (102) wenigstens einen ersten Kolben (116) umfasst, einer zweiten Zylinder-Kolben-Einrichtung (104) mit einem zweiten Kolben (130) und mit einem auf den zweiten Kolben (130) der zweiten Zylinder-Kolben-Einrichtung (104) einwirkenden elektromechanischen Aktor (106), wobei die zweite Zylinder-Kolben-Einrichtung (104) mit dem ersten Kolben (116) der ersten Zylinder-Kolben-Einrichtung (102) fluidisch zu koppeln ist, und wobei die zweite Zylinder-Kolben-Einrichtung (104) mit dem ersten Bremskreis (300) und/oder dem zweiten Bremskreis (400) direkt fluidisch zu koppeln ist, wobei das Verfahren die folgenden Schritte umfasst:
- Detektieren wenigstens eines, auf einen Fahrerbremswunsch oder eine Notwendigkeit eines Fahrdynamikregeleingriffs hinweisenden Parameters;
- Betätigen, mittels des elektromechanischen Aktors (106), des zweiten Kolbens (130) der zweiten Zylinder-Kolben-Einrichtung (104) in Abhängigkeit des detektierten Parameters, um einen Hydraulikdruck zu erzeugen, der zur Betätigung der ersten Zylinder-Kolben-Einrichtung (102) oder direkt zur Hydraulikdruckbeaufschlagung des ersten Bremskreises (300) oder des zweiten Bremskreis (400) dient.

13. Verfahren nach Anspruch 12, wobei das Verfahren weiter umfasst:
- Ermitteln der Position des elektromechanischen Aktors (106) und des damit zu koppelnden zweiten Kolbens (130) der zweiten Zylinder-Kolben-Einrichtung (104).

14. Verfahren nach Anspruch 13, wobei das Verfahren weiter umfasst:
- Bestimmen der Relativpositionen des ersten Kolbens (116) und eines Sekundärkolbens (120) der ersten Zylinder-Kolben-Einrichtung (102) relativ zueinander anhand der ermittelten Position des elektromechanischen Aktors (106).

15. Verfahren nach Anspruch 13 oder 14, wobei das Verfahren weiter umfasst:
- Ermitteln des in den ersten Bremskreis (300) und/oder den zweiten Bremskreis (400) nachzufördernden Hydraulikfluidvolumens anhand der ermittelten Position des elektromechanischen Aktors (106).

16. Verfahren nach einem der Ansprüche 13 bis 15, wobei das Verfahren weiter umfasst:
- Bestimmen der Verteilung des von der zweiten Zylinder-Kolben-Einrichtung (104) abgegeben Hydraulikfluidvolumens zwischen dem ersten Bremskreis (300) und dem zweiten Bremskreis (400) und/oder der ersten Zylinder-Kolben-Einrichtung (102) anhand der ermittelten Position des elektromechanischen Aktors (106).

17. Verfahren nach Anspruch 15 oder 16, wobei das Verfahren weiter umfasst:
- Nachfördern des ermittelten nachzufördernden Hydraulikfluidvolumens in den ersten Bremskreis (300) und/oder den zweiten Bremskreis (400), wobei die Nachförderung des ermittelten Hydraulikfluidvolumens in den ersten Bremskreis (300) und in den zweiten Bremskreis (400) sequentiell erfolgt.

## Claims

1. An electrohydraulic motor vehicle brake system (1000), comprising:
a first brake circuit (300) with at least one wheel brake (302, 304),
a second brake circuit (400) with at least one wheel brake (402, 404),
a first cylinder-piston device (102) to be fluidly coupled with at least one of the first or the second brake circuit (300, 400) for hydraulic pressure generation in at least one of the first or the second brake circuit (300, 400), wherein the first cylinder-piston device (102) comprises at least one first piston (116),
a second cylinder-piston device (104) which comprises at least one second piston (130), and
an electromechanical actuator (106) of the second cylinder-piston device (104), which acts on the second piston (130),
wherein the second cylinder-piston device (104) is to be fluidly coupled with the first cylinder-piston device (102) in order to provide a hydraulic pressure which is generated in the second cylinder-piston device (104) upon an operation of the electromechanical actuator (106) for an operation of the first cylinder-piston device (102), and wherein the second cylinder-piston device (104) is to be fluidly coupled with the first brake circuit (300) and/or the second brake circuit (400) in such a manner that upon an operation of the electromechanical actuator (106) of the second cylinder-piston device (104) the first and/or the second brake circuit (300, 400) are to be directly applied with a hydraulic pressure which is generated in the second cylinder-piston device (104),
wherein the second piston of the second cylinder-piston device (104) divides the cylinder (118) of the second cylinder-piston device (104) into a first hydraulic chamber (134) and a second hydraulic chamber (136),
wherein the second piston (130) of the second cylinder-piston device (104) is displaceable in a first operating direction and in a second operating direction in order to change the volume of the first hydraulic chamber (134) and of the second hydraulic chamber (136).

2. The electrohydraulic brake system (1000) according to Claim 1,
wherein the first hydraulic chamber (134) is to be fluidly coupled with the first cylinder-piston device (102).

3. The electrohydraulic brake system (1000) according to Claim 1 or 2,
wherein the second hydraulic chamber (136) is to be fluidly coupled with the first and/or the second brake circuit (300, 400).

4. The electrohydraulic brake system (1000) according to any of Claims 1 to 3,
wherein the first hydraulic chamber (134) is to be fluidly coupled with the first brake circuit (300) and/or the second brake circuit (400).

5. The electrohydraulic brake system (1000) according to any of Claims 1 to 4,
wherein the second hydraulic chamber (136) is to be fluidly coupled with the first cylinder-piston device (102).

6. The electrohydraulic brake system (1000) according to any of Claims 1 to 5,
wherein at least one sensor unit (108, 110, 176) is provided which detects the position of the electromechanical actuator (106).

7. The electrohydraulic brake system (1000) according to any of Claims 1 to 6,
wherein at least one control unit (ECU) is configured to determine the relative positions of the first piston (116) and of a secondary piston (120) of the first cylinder-piston device (102) relative to one another on the basis of the signals of the at least one sensor unit (108, 110, 176).

8. The electrohydraulic brake system (1000) according to any of Claims 1 to 7,
wherein the at least one control unit (ECU) is configured to determine the position of the second piston (130) of the second cylinder-piston device (104) on the basis of the signals of the at least one sensor unit (108, 110, 176).

9. The electrohydraulic brake system (1000) according to any of Claims 7 or 8,
wherein the control unit is configured to establish the distribution of the hydraulic fluid volume delivered from the second cylinder-piston device (104) between the first brake circuit (300) or the second brake circuit (400) and/or the first cylinder-piston device (102) by the at least one control unit (ECU) on the basis of the signals of the at least one sensor unit (108, 110, 176).

10. The electrohydraulic brake system (1000) according to any of Claims 1 to 9,
wherein the first cylinder-piston device (102) and the second cylinder-piston device (104) are fluidly connected in series via a fluid path (112).

11. The electrohydraulic brake system (1000) according to any of Claims 1 to 10, wherein the second cylinder-piston device (104) is connected directly to the first brake circuit (300) via a fluid path (146, 148) and directly to the second brake circuit (400) via a further fluid path (146, 152), wherein each of the fluid paths (148, 152) has at least one controllable valve (156, 158).

12. A method for operating an electrohydraulic motor vehicle brake system (1000) with a first cylinder-piston device (102) which is to be fluidly coupled with a first brake circuit (300) and a second brake circuit (400) for generating hydraulic pressure in at least one of the two brake circuits (300, 400), wherein the first cylinder-piston device (102) comprises at least one first piston (116), a second cylinder-piston device (104) with a second piston (130) and an electromechanical actuator (106) which acts on the second piston (130) of the second cylinder-piston device (104), wherein the second cylinder-piston device (104) is to be fluidly coupled with the first piston (116) of the first cylinder-piston device (102), and wherein the second cylinder-piston device (104) is to be fluidly coupled directly with the first brake circuit (300) and/or the second brake circuit (400), wherein the method comprises the following steps:
- detecting at least one parameter indicating a driver's intention to brake or a necessity for an intervention by a vehicle dynamics management system;
- operating the second piston (130) of the second cylinder-piston device (104) by means of the electromechanical actuator (106) in dependence on the detected parameter in order to generate a hydraulic pressure which serves to operate the first cylinder-piston device (102) or to directly apply hydraulic pressure to the first brake circuit (300) or the second brake circuit (400).

13. The method according to Claim 12, wherein the method further comprises:
- detecting the position of the electromechanical actuator (106) and of the second piston (130) of the second cylinder-piston device (104) which is to be coupled therewith.

14. The method according to Claim 13, wherein the method further comprises:
- determining the relative positions of the first piston (116) and of a secondary piston (120) of the first cylinder-piston device (102) relative to one another on the basis of the detected position of the electromechanical actuator (106).

15. The method according to Claim 13 or 14, wherein the method further comprises:
- determining the volume of hydraulic fluid to be additionally supplied to the first brake circuit (300) and/or the second brake circuit (400) on the basis of the detected position of the electromechanical actuator (106).

16. The method according to any of Claims 13 to 15, wherein the method further comprises:
- determining the distribution of the volume of hydraulic fluid delivered from the second cylinder-piston device (104) between the first brake circuit (300) and the second brake circuit (400) and/or the first cylinder-piston device (102) on the basis of the detected position of the electromechanical actuator (106).

17. The method according to Claim 15 or 16, wherein the method further comprises:
- additionally supplying the determined volume of hydraulic fluid to be additionally supplied to the first brake circuit (300) and/or the second brake circuit (400), wherein the additional supply of the determined volume of hydraulic fluid to the first brake circuit (300) and to the second brake circuit (400) takes place sequentially.

## Revendications

1. Système de freinage de frein électro-hydraulique (1000) de véhicule automobile, comprenant :
un premier circuit de freinage (300) comprenant au moins un frein de roue (302, 304), un second circuit de freinage (400) comprenant au moins un frein de roue (402, 404),
un premier ensemble cylindre-piston (102) à mettre en communication fluidique avec au moins un des premier et second circuits de freinage (300, 400) pour produire la pression hydraulique au moins dans un premier et un second circuit de freinage (300, 400), le premier ensemble cylindre-piston (102) comprenant au moins un premier piston (116),
un second ensemble cylindre-piston (104) qui comprend au moins un second piston (130), et
un actionneur (106) électromécanique agissant sur le second piston (130) du second ensemble cylindre-piston (104),
le second ensemble cylindre-piston (104) devant être mis en communication fluidique avec le premier ensemble cylindre-piston (102), pour fournir lors de l'actionnement de l'actionneur électromécanique (106) une pression hydraulique produite dans le second ensemble cylindre-piston (104) pour un actionnement du premier dispositif cylindre-piston (102), et le second dispositif ensemble -piston (104) devant être mis en communication fluidique avec le premier circuit de freinage (300) et/ou le second circuit de freinage (400) de sorte que lors de l'actionnement de l'actionneur électro-mécanique (106) du second dispositif cylindre-piston (104) le premier et/ou second circuit de freinage (300, 400) soit directement soumis à l'effet de la pression hydraulique produite dans le second ensemble cylindre-piston (104),
le second piston du second ensemble cylindre-piston (104) divise le cylindre (118) du second ensemble cylindre-piston (104) en une première chambre hydraulique (134) et en une seconde chambre hydraulique (136),
pour la modification du volume de la première chambre hydraulique (134) et de la seconde chambre hydraulique (136) le second piston (130) du second dispositif cylindre-piston (104) pouvant être déplacé dans un premier sens d'actionnement et dans un second sens d'actionnement.

2. Système de freinage électro-hydraulique (1000) selon la revendication 1, la première chambre hydraulique (134) devant être mise en communication fluidique avec le premier ensemble cylindre-piston (102).

3. Système de freinage électro-hydraulique (1000) selon la revendication 1 ou la revendication 2, la seconde chambre hydraulique (136) devant être mise en communication fluidique avec le premier et/ou le second circuit de freinage (300, 400).

4. Système de freinage électro-hydraulique (1000) selon l'une quelconque des revendications 1 à 3, la première chambre hydraulique (134) devant être mise en communication fluidique avec le premier circuit de freinage (300) et/ou le second circuit de freinage (400).

5. Installation de frein électro-hydraulique (1000) selon l'une quelconque des revendications 1 à 4, la seconde chambre hydraulique (136) devant être mise en communication fluidique avec le premier ensemble cylindre-piston (102).

6. Système de freinage électro-hydraulique (1000) selon l'une quelconque des revendications 1 à 5, au moins une unité de détection (108, 110, 176) permettant de déterminer la position de l'actionneur électromécanique (106).

7. Système de freinage électro-hydraulique (1000) selon l'une quelconque des revendications 1 à 6, au moins une unité de commande (ECU) étant conçue pour déterminer les positions relatives du premier piston (116) et du second piston (120) du premier ensemble cylindre-piston (102) les unes par rapport aux autres en faisant appel à des signaux provenant de ladite unité de détection (108, 110, 176).

8. Système de freinage électro-hydraulique (1000) selon l'une quelconque des revendications 1 à 7, ladite unité de commande (ECU) étant conçue pour définir la position du second piston (130) du second ensemble cylindre-piston (104) en faisant appel à des signaux provenant de ladite unité de détection (108, 110, 176).

9. Installation de frein électro-hydraulique (1000) selon l'une des revendications 7 ou 8, l'unité de commande étant conçue pour définir la répartition du volume de fluide hydraulique distribué par le second ensemble cylindre-piston (104) entre le premier circuit de freinage (300) ou le second circuit de freinage (400) et/ou le premier ensemble cylindre-piston (102) en faisant appel à des signaux provenant de ladite unité de détection (108, 110, 176).

10. Système de freinage électro-hydraulique (1000) selon l'une quelconque des revendications 1 à 9, le premier ensemble cylindre-piston (102) et le second ensemble cylindre-piston (104) étant montés en série fluidiquement sur un trajet de fluide (112).

11. Système de freinage électro-hydraulique (1000) selon l'une quelconque des revendications 1 à 10, le second ensemble cylindre-piston (104) étant relié par un trajet de fluide (146, 148) directement au premier circuit de freinage (300) et par un autre trajet de fluide (146, 152) directement au second circuit de freinage (400), chacun des trajets de fluide (148, 152) comportant une soupape (156, 158) pouvant être commandée.

12. Procédé de fonctionnement d'une installation de frein électro-hydraulique (1000) de véhicule automobile comprenant un premier ensemble cylindre - piston (102) devant être mise en communication fluidique avec un premier circuit de freinage (300) et un second circuit de freinage (400) pour la production de pression hydraulique dans au moins l'un des deux circuits de freinage (300, 400), le premier ensemble cylindre - piston (102) comprenant au moins un premier piston (116), comprenant un second ensemble cylindre - piston (104) comportant un second piston et un actionneur électromécanique (106) agissant sur le second piston (130) du second ensemble cylindre - piston (104), le second ensemble cylindre - piston (104) devant être mise en communication fluidique avec le premier piston (116) du premier ensemble cylindre - piston (102) et le second ensemble cylindre - piston (104) devant être directement mis en communication fluidique avec le premier circuit de freinage (300) et/ou le second circuit de freinage (400), le procédé comprenant les étapes suivantes consistant à :
- détecter au moins un paramètre indiquant un souhait de freinage du conducteur ou une nécessité d'une intervention de l'électro-stabilisateur programmé - actionner, au moyen de l'actionneur électro-mécanique (106), le second piston (130) du second ensemble cylindre - piston (104) en fonction du paramètre détecté pour produire une pression hydraulique qui sert à actionner le premier ensemble cylindre - piston (102) ou directement pour soumettre le premier circuit de freinage (300) ou le second circuit de freinage (400) à l'effet de la pression hydraulique.

13. Procédé selon la revendication 12, le procédé consistant en outre à:
- déterminer la position de l'actionneur électro-mécanique (106) et du second piston (130) ainsi à coupler du second ensemble cylindre - piston (104).

14. Procédé selon la revendication 13, le procédé consistant en outre à:
- déterminer les positions relatives du premier piston (116) et d'un second piston (120) du premier ensemble cylindre - piston (102) les unes par rapport aux autres au moyen de la position déterminée par l'actionneur électro-mécanique (106).

15. Procédé selon la revendication 13 ou la revendication 14, le procédé consistant en outre à :
- déterminer le volume de fluide hydraulique à faire parvenir dans le premier circuit de freinage (300) et/ou dans le second circuit de freinage (400) en faisant appel à la position déterminée de l'actionneur électromécanique (106).

16. Procédé selon l'une quelconque des revendications 13 à 15, le procédé consistant en outre à :
- déterminer la répartition du volume de fluide hydraulique distribué par le second ensemble cylindre - piston (104) entre le premier circuit de freinage (300) et le second circuit de freinage (400) et/ou le premier ensemble cylindre - piston (102) en faisant appel à la position déterminée par l'actionneur électro-mécanique (106).

17. Procédé selon la revendication 16 ou la revendication 15, le procédé consistant en outre à :
- faire parvenir le volume de fluide hydraulique déterminé dans le premier circuit de freinage (300) et/ou dans le second circuit de freinage (400), l'apport du volume de fluide hydraulique déterminé dans le premier circuit de freinage (300) et/ou dans le second circuit de freinage (400), s'effectuant séquentiellement.
